# EUROPÄISCHE PATENTSCHRIFT

(11) **EP 2 468 495 B1**
(45) Veröffentlichungstag und Bekanntmachung des Hinweises auf die Patenterteilung: **15.01.2020**
(21) Anmeldenummer: 11195422.8
(22) Anmeldetag: 22.12.2011
(51) Int. Cl.: B32B 3/12, B32B 5/18, B32B 3/26, B32B 5/14, E04B 2/92

(54) **IM RANDBEREICH VERSTÄRKTE SANDWICHPLATTE, VERSTÄRKUNGSELEMENT UND VERFAHREN ZUR HERSTELLUNG EINER IM RANDBEREICH VERSTÄRKTEN SANDWICHPLATTE**
SANDWICH BOARD WITH REINFORCED EDGE AREA, REINFORCEMENT ELEMENT AND METHOD FOR PRODUCING SAME
PLAQUE EN SANDWICH RENFORCÉE SUR LA ZONE PÉRIPHÉRIQUE, ÉLÉMENT DE RENFORCEMENT ET PROCÉDÉ DE FABRICATION D'UNE PLAQUE EN SANDWICH RENFORCÉE SUR LA ZONE PÉRIPHÉRIQUE

(30) Priorität: 22.12.2010 DE 102010056489
(43) Veröffentlichungstag der Anmeldung: 27.06.2012
(73) Patentinhaber: HOMAG GmbH, 72296 Schopfloch (DE)
(72) Erfinder: Herold, Jan, 01099 Dresden (DE)
(74) Vertreter: Hoffmann Eitle

(56) Entgegenhaltungen:
- EP-A1- 2 108 504
- DE-A1- 10 134 268
- DE-U1-202007 011 476
- US-A- 4 971 857
- STOSCH, M.: "Ein Beitrag zum Schmalflächenverschluss von leichten Sandwichplatten für den industriellen Möbelbau", FACHVORTAG DER KONFERENZ AUTOMATION IN DER HOLZWIRTSCHAFT 18./19. SEPTEMBER 2008, [Online] 18 September 2008 (2008-09-18),

## Beschreibung

Die Erfindung betrifft eine im Randbereich verstärkte Sandwichplatte, ein Verstärkungselement und ein Verfahren zur Herstellung von im Randbereich verstärkten Sandwichplatten.

Unter Sandwichplatten werden im Sinne dieser Erfindung mehrlagige Leichtbauplatten mit mindestens zwei äußeren Decklagen und mindestens einer Kernlage verstanden, wobei die Kernlage aus einem Leichtbaumaterial (Papier- oder Pappwabenkern, PUR-Schaum, u. dgl.) besteht. Rahmenlose Sandwichplatten weisen an den umlaufenden Außenrändern keine feste, kraft- oder stoffschlüssige Verbindung (z. B. durch verklebte oder verschraubte Riegeleinlagen) zwischen den Decklagen auf. Unter Leichtbaumaterial für die Kernlage werden im Sinne dieser Erfindung Werkstoffe verstanden, die eine geringere Dichte als die Decklagen aufweisen.

Beim Einsatz von Sandwichplatten ergeben sich für den Anwender gegenwärtig vielfältige konstruktive und technologische Probleme, die nachfolgend beschrieben werden.

Aus dem Stand der Technik sind Sandwichelemente bekannt, die in der Regel eine Kernlage aus aufgeschäumten Werkstoffen oder eine strukturierte Kernschicht, z. B. mit wabenförmiger, stegförmiger oder wellblechförmiger Struktur, aufweisen. Bei bekannten, mehrlagigen Sandwichkonstruktionen ist die plattenförmige Kernschicht ein- oder beidseitig mit einer Deckschicht form-, stoff- oder kraftschlüssig verbunden. Aus Gründen des Leichtbaus und aus ökologischen Aspekten werden für die dünnwandigen Decklagen vielfach Holz-, Holzwerkstoff- oder Naturfasern geringer Dicke verwendet. Daneben werden Kunststoff oder Metallbleche als Deckschichten eingesetzt.

In der Möbelbranche werden derzeit leichte Plattenwerkstoffe, bestehend aus Decklagen und Mittellage, vorrangig Sandwichplatten mit Papierwabenkern, im Markt eingeführt. Bei diesen Werkstoffen besteht die Mittellage (Kernlage) aus einer Hohlstruktur, lediglich ca. 5% Material bilden die stützende Hohlraumstruktur der Mittellage. Eine Befestigung von Beschlägen in dieser Mittellage, wie bisher bei den Holzwerkstoffen üblich, ist nicht mehr ohne weiteres möglich.

Die Nutzung von Adaptern zu einer konstruktiven Beschlagbefestigung ist sehr kostenintensiv und der Aufwand steht nicht im Verhältnis zum Nutzen. Hierbei handelt es sich um sehr aufwendige Beschläge, die in die Sandwichplatte eingebracht und dort vorrangig über Bindemittel an den Deckschichten fixiert werden.

Die Festigkeit einer Sandwichplatte mit Papierwabenkern (Wabenplatte) an der Schmalfläche ist systembedingt sehr gering, da sie zum größten Teil aus einer offenen Hohlraumstruktur besteht. Das Ziel im Möbelleichtbau besteht für den Randbereich einer Wabenplatte in einem Abschluss, der sowohl eine stützende als auch optisch abschließende Funktion übernimmt. Problematisch ist die Beschichtung solcher Platten (vorrangig mit Kernschichthöhen >25mm und Zellweiten ≥15 mm) mit dünnen (0,2-1,5 mm) Schmalflächenbeschichtungsbänder (Kunststoffkante). Die Kunststoffkanten neigen zu einem "Schüsseln", d. h. sie bilden keine plane, sondern eine konkave Beschichtung der Werkstückschmalfläche aus. Weiterhin sind Sie unter Belastung sehr anfällig gegen Stöße.

Sandwichplatten mit sehr dünnen Deckschichten (< 3 mm) weisen zusätzlich das Problem auf, das sie sehr wenig Verbindungsfläche für eine tragfähige Klebeverbindung zwischen den Schmalseiten der beiden Deckschichten und dem Schmalflächenbeschichtungsband bereitstellen. Dieses Problem ist für die Industrie gegenwärtig nicht gravierend, da die Stückzahlen derartiger Sandwichplatten mit dünnen Decklagen aufgrund der genannten Gegebenheiten sehr gering sind.

Zum Einbringen von Lastübertragungsmitteln, wie Holzdübel oder Passstifte, auf denen z. B. Einlegeböden aufgelegt werden, weisen Möbel vorgefertigte Bohrungen auf.

Bekannt ist eine als "Raster 32" bezeichnete Lochreihung, vorrangig in den Möbelseiten (vertikales Bauteil), mit einem normierten Abstand der Bohrungen von jeweils 32 mm. Die Bohrungen verlaufen vertikal in der Möbelseite und bestehen immer aus mindestens zwei parallelen Reihen, und das anschließende Auflegen des Fachbodens.

Es ist keine speziell auf das Problem abgestimmte Lösung aus dem Stand der Technik zum Raster 32 im Möbelleichtbau bekannt. Bisher wurde bei den üblichen Holzwerkstoffen der Möbelindustrie (z. B. Spanplatte) das Raster 32 direkt eingebohrt.

Aus dem Stand der Technik sind weitere Lösungen bekannt, die eine bessere Krafteinleitung und -aufnahme bei Leichtbauplatten vorschlagen.

In der **D1** (DE 24 25 014 A1) wird eine Zellenstrukturplatte mit funktionsfähigen Krafteinleitungspunkten, die einen guten Verbund mit Füllkörper und Deckplatten aufweisen, sowie ein Verfahren zu deren Herstellung beschrieben. In diese Krafteinleitungspunkte werden Einsatzkörper aus gehärtetem Kunststoff derart eingelegt, dass sie die obere und untere Deckplatte sowie Füllkörper stoffschlüssig miteinander verbinden. Um einen guten Verbund mit der Platte einzugehen, müssen die Einsatzkörper in den nicht randnahen Bereichen in die Platte eingelegt werden. Eine randnahe Anordnung dieser Einsatzkörper, mit dem Ziel eine Stützlage für Seitenflächenabdeckungen oder Krafteinleitungspunkte für Befestigungsmittel zu schaffen, ist demgegenüber nicht vorteilhaft.

In der **D2** (DE 10 2008 035 14 A1) wird eine Leichtbauplatte als Möbelplatte offenbart, die eine einfache Anbringung von Abdeckungen im Bereich der Schmalfläche der Leichtbauplatte ermöglichen soll. Dazu weist die Leichtbauplatte eine, zwischen den Decklagen befindliche Mittellage mit mindestens zwei Lagen mit quer zur Plattenebene verlaufenden Stegen auf. Zwischen diesen, mindestens zwei Lagen ist mindestens eine Stützlage plan-parallel zur Plattenebene angeordnet, die eine größere Formstabilität aufweist, als jede der mindestens zwei Lagen. Um die Anbringung von Schmalflächenabdeckungen zu erleichtern, wird somit die gesamte Struktur der Platte angepasst. Ein nachträglicher Einsatz dieser Lösung bei beliebigen Plattenelementen ist daher nicht möglich.

Die **D3** (DE 20 2007 011 476 U1) beschreibt eine Papierwabenkompositplatte, die eine besonders hohe Festigkeit bei gleichzeitig sehr niedrigem Gewicht aufweisen soll. Dazu weist die Platte neben Ober- und Unterplatte sowie Papierwabenkern zusätzlich Stützteile auf, die zwischen Ober- und Unterplatte angeordnet sind und den Papierwabenkern in dessen Randbereich teilweise oder vollständig umgeben.

Die Stützteile bilden somit einen in der Regel umlaufenden Rahmen um die Platte, der Ober- und Unterplatte stoffschlüssig miteinander verbindet. Durch den Rahmen wird das Gesamtgewicht der Platte deutlich erhöht, was in keiner Relation zum Nutzen steht, soll der Rahmen nur zum Aufbringen von Schmalflächenabdeckungen dienen. Bei der Krafteinleitung in den Rahmen wird die Kraft vorrangig auf die Deckplatten, nicht jedoch in das Kernmaterial eingeleitet. Zudem sind der fertigungstechnische Aufwand und der Materialeinsatz durch das Anbringen eines solchen Stützrahmens an einer Leichtbauplatte deutlich erhöht.

So offenbart die US 49 71 857 eine Sandwichplatte, die aus zwei Außenschalen besteht und einen Kern aus aufgeschäumtem Kunststoff aufweist. Innerhalb des Kerns befinden sich Aussparungen, in die Einsätze aus Hartplastik (z.B. ABS) eingesetzt sind und als Aufnahmepunkte für Zurrschienen oder ähnliches dienen.

Die DE 20 2007 011 476 U1 bezieht sich auf eine Papierwabenkern-Kompositplatte, die aus einer Oberplatte, einer Unterplatte, einem Papierwabenkern der zwischen Oberplatte und Unterplatte eingesetzt ist und inneren Stützteilen besteht, wobei sich die Stützteile zwischen Oberplatte und Unterplatte befinden und den Umfang des Papierwabenkerns vollständig oder teilweise umgeben.

Daneben gibt es unterschiedliche Sonderlösungen, um das eingangs beschriebene "Schüsseln" der Schmalflächenbeschichtungsbänder beim Kaschieren der offenen Schmalflächen an Sandwichplatten zu verhindern.

Ein bekanntes Verfahren sieht vor, dass durch vollständiges Ausfräsen des Wabenkerns in der Randzone der Mittellage und die unmittelbar angrenzenden beiden Decklagen eine kompakte Ausnehmung geschaffen wird, in die nachfolgend ein Riegel aus Massivholz oder Holzwerkstoff formschlüssig eingelegt und verklebt wird. Dadurch entsteht eine Sandwichplatte mit einem nachträglich eingefügten, umlaufenden Rahmen. Die eingefügten Riegel erhöhen die Biege- und Torsionssteifigkeit der Sandwichplatte und dienen als Auflagefläche für die nachfolgend aufgebrachten Schmalflächenbänder (vgl. Stosch, M.: Ein Beitrag zum Schmalflächenverschluss von leichten Sandwichplatten für den industriellen Möbelbau. Unterlagen zum Fachvortrag der Konferenz Automation in der Holzwirtschaft, Biel, 18.-19. September 2008.)

Ferner offenbart die DE 101 34 268 A1 ein Verfahren zur Herstellung eines Sandwichelements sowie ein Sandwichelement, das im Wesentlichen aus zwei plattenförmigen Teilen, die parallel und beabstandet zueinander angeordnet sind, und einer aus einem Dämmmaterial bestehenden Zwischenlage gebildet wird. Ferner ist hier eine Nut entlang einer Ober- oder Unterseite ausgebildet, in die eine Versteifungsstrebe eingelegt und darin fixiert wird.

Die EP 2 108 504 A1 bezieht sich auf ein Verfahren und System zum Reparieren eines Gasturbinteils, welches einen Riss in einer der äußeren Deckplatten aufweist. Dabei wird die Rissregion aus der Deckplatte herausgetrennt und das entstehende Negativ mit einem sogenannten Filler ausgefüllt. Der Filler schließt dabei eben mit der restlichen Deckplatte ab, sodass ein sogenannter Doppler mit dem Filler so verbunden werden kann, dass der Doppler mit der restlichen Deckplatte einen Überlappstoß ausbildet.

Nachteile dieses Verfahrens sind die hohe Fertigungsgenauigkeit, um das formschlüssige Fügen des Riegels zu ermöglichen. Außerdem verursachen der Einsatz der umlaufenden Riegel, die die beiden Decklagen im Randbereich verbinden, deutlich höhere Materialkosten und eine ungewollte Zunahme der Gesamtmasse der Leichtbauplatte. Nachfolgend wird auf den biegesteifen Riegel das dekorative, sichtbare Schmalflächenband aufgebracht.

Aufgabe der Erfindung ist es, die Nachteile des bekannten Standes der Technik zu eliminieren und eine rahmenlose Sandwichplatte anzugeben, die das Durchschlagen oder "Schüsseln" der Schmalflächenbeschichtungsbänder verhindert und die bessere Aufnahme von Beschlagteilen oder Verbindungselementen in der Randzone ermöglicht.

Daneben soll ein einfach herzustellendes, kostengünstiges Verstärkungselement geschaffen werden, dass die Aufnahme größerer Kräfte und Momente in der Randzone der rahmenlosen Sandwichplatte ermöglicht und zugleich das "Schüsseln" des aufgetragenen Schmalflächenbeschichtungsbandes verhindert.

Weiterhin soll ein kostengünstiges technologisches Verfahren zur Herstellung von im Randbereich verstärkten Sandwichplatten vorgeschlagen werden.

Erfindungsgemäß wird die Aufgabe durch eine Sandwichplatte mit den im Anspruch 1 genannten Merkmalen gelöst. Vorteilhafte Ausgestaltungen der rahmenlosen Sandwichplatte sind Gegenstand von abhängigen Unteransprüchen.

Weiterhin wird die Aufgabe durch ein biegeschlaffes Verstärkungselement mit den im Anspruch 6 genannten Merkmalen gelöst. Vorteilhafte Ausgestaltungen des als Armierung und als Auflagefläche für das aufzubringende Schmalflächenbeschichtungsband fungierenden Verstärkungselementes sind Gegenstand weiterer abhängiger Unteransprüche.

Daneben wird die Aufgabe durch ein Herstellungsverfahren mit den im Anspruch 10 genannten Merkmalen gelöst. Vorteilhafte Varianten des Verfahrens sind Gegenstand von abhängigen Unteransprüchen.

Die Sandwichplatte mit mindestens zwei äußeren Decklagen und mindestens einer Kernlage, die aus einem Leichtbaumaterial (Papier- oder Pappwabenkern, PUR-Schaum) besteht, weist in der Randzone mindestens eine, bevorzugt parallel zu den Decklagen verlaufende Nut auf. In dieser Nut ist mindestens ein biegeschlaffes Verstärkungselement form- und/oder kraft- und/oder stoffschlüssig mit der Randzone der Kernlage bzw. den angrenzenden Decklagen verbunden.

Das vorzugsweise biegeschlaffe, band- oder stabförmige Verstärkungselement weist einen rechteckigen, dreieckigen, keil- oder trapezförmigen Querschnitt aufweist und besteht bevorzugt aus Holz, Holzwerkstoff, Pappe, Papier oder Kunststoff. In Abhängigkeit von der Plattengröße der Sandwichplatten, den Stückzahlen/Losgrößen und den gewünschten mechanischen Eigenschaften in der Randzone können die Verstärkungselemente als Stab- oder Stangenabschnitt eingesetzt werden, deren Länge einen technologisch notwendigen Überstand zum Größtmaß der zu fertigenden Sandwichplatte aufweist.

Alternativ und bevorzugt werden bandförmige Verstärkungselemente verwendet, die als quasi Endlosmaterial in Rollenform (Haspel/Coil) dem Fügeprozess zugeführt werden.

Um die Verformbarkeit der Verstärkungselemente zu verbessern, weisen sie bevorzugt Schlitze, Durchbrüche oder Aussparungen auf.

In einer weiteren, gleichfalls bevorzugten Ausgestaltung bestehen die Verstärkungselemente aus mindestens zwei, in Längsrichtung des Verstärkungselementes parallel verlaufenden Abschnitten, von denen mindestens ein Abschnitt aus einem Werkstoff, bevorzugt einem Klebstoff besteht, der thermisch aktivierbar oder reaktivierbar ist. Damit kann Klebstoff zielgerichtet in die Bereiche der Randzone der Sandwichplatte eingebracht werden, die nach der Verklebung eine höhere Festigkeit aufweisen sollen.

Das erfindungsgemäße flache Verstärkungselement weist gegenüber seiner Breite nur eine geringe Dicke auf. Für die notwendige Verformbarkeit beim seitlichen Einbringen des Verstärkungselementes in die zuvor geschaffene Nut weist das Verstärkungselement entlang der Längsrichtung eine erhöhte Verformbarkeit auf.

Bevorzugt werden band- oder stangenförmige Verstärkungselemente verwendet, deren Schmalseite eine Dicke von 1 mm bis 10 mm und die Breitseite eine Breite von 5 mm bis 50 mm aufweist.
Für die Aufnahme von Beschlagteilen, Befestigungsmitteln, u. dgl. weisen die Verstärkungselemente bevorzugt Schlitze, Ausnehmungen oder Perforationen auf. Diese Schlitze, Ausnehmungen oder Perforationen dienen daneben zugleich zur Verbesserung der Verformbarkeit der bandförmigen Verstärkungsmittel bei der Zuführung vom Coil oder einer Rolle und zugleich für das seitliche Einfügen in die Nuten der Kernlage.

In einer bevorzugten Ausgestaltung sind die Schlitze, Ausnehmungen oder Perforationen in Längsrichtung des Verstärkungselementes ein- oder beidseitig angeordnet sind und weisen einen linearen, kurvenförmigen oder gezackten Verlauf auf.

In einer weiteren, gleichfalls bevorzugten Ausgestaltung bestehen die Verstärkungselemente aus mindestens zwei, in Längsrichtung des Verstärkungselementes parallel verlaufenden Abschnitten, von denen mindestens ein Abschnitt aus einem Werkstoff besteht, der thermisch aktivierbar oder reaktivierbar ist. Damit kann Klebstoff zielgerichtet auch in tiefer liegende Bereiche der Randzone der Sandwichplatte eingebracht werden, in denen die Sandwichplatte nach der Verklebung höher belastbar sein soll.

Das erfindungsgemäße Verfahren zur Herstellung einer rahmenlosen, im Randbereich verstärkten Sandwichplatte mit mindestens zwei äußeren Decklagen und mindestens einer Kernlage, die aus einem Leichtbaumaterial (Papier- oder Pappwabenkern, PUR-Schaum) besteht, geschieht in folgenden Schritten:
Nach dem stoffschlüssigen Fügen der Kern- und Decklagen durch Verkleben wird anschließend mindestens eine, bevorzugt parallel zu den Decklagen verlaufende Nut in die Kernlage eingebracht, nachfolgend in die so geschaffene Nut mindestens ein bevorzugt biegeschlaffes Verstärkungselement eingefügt. Optional wird anschließend der Überstand des Verstärkungselementes zur Herstellung eines bündigen Abschlusses der Sandwichplatte spanlos oder spanend bearbeitet.

Um eine bevorzugte, kontinuierliche Fertigung zu ermöglichen, werden die Verstärkungselemente vorteilhaft als Bandmaterial von einer Rolle/einem Coil dem Fügeprozess zugeführt. Zum Fügen des Verstärkungselementes wird ein Abschnitt des biegeweichen Verstärkungselements zur Nut vorgelegt und in die Nut eingeführt wird, wobei die verbleibende Länge gegenüber dem vorgelegten Abschnitt unter Ausbildung eines gebogenen Bereiches zur Schmalfläche der Sandwichplatte ausgestellt und unter Führung des gebogenen Bereiches entlang der verbleibenden Länge das Verstärkungselement in die Nut gefügt wird.

In einer weiteren vorteilhaften Ausgestaltung des Fügeverfahrens wird mit Hilfe der band- oder stabförmigen Verstärkungselemente zusätzlich Leim, insbesondere in die tieferen Zonen aber auch die äußeren Randzonen der Kernlage eingebracht.

Das Einbringen von Lochbildern oder einzelnen Bohrungen oder Ausnehmungen für die spätere Aufnahme von Beschlagteilen erfolgt als abschließende Prozessstufe.

In einer bevorzugten Variante des Verfahrens weisen die verwendeten, formschlüssig gefügten Verstärkungselemente bereits ein vorgefertigtes Lochraster auf, so dass die Stückzeit für die nachfolgende spanende Bearbeitung (Bohren/Fräsen) reduziert werden kann.

Wesentlich an der Erfindung ist, dass im Wesentlichen flachbandförmige Verstärkungselemente verwendet werden, die in der plattenparallelen Ebene derart verformt werden können, das es während der Verformung zu keiner Zunahme der Dicke (kürzere Seite des flachbandförmiges Material) kommt. Die Verformung ist notwendig, damit das Verstärkungselement im kontinuierlichen Prozess dem zu fertigenden Werkstück zugeführt und in die vorbereitete Nut eingefügt werden kann. Die Einhaltung dieser Bedingungen ist erforderlich, da die Nut im Werkstück keine Dickenzunahme zulässt.

Die Verformung des flachen, bandförmigen Verstärkungselementes lässt sich auf unterschiedliche Weise realisieren. Dazu gehören:
- ausreichende Elastizität als Materialkenngröße,
- eine entsprechende geometrische Ausformung, d. h. gelocht, geschlitzt oder in ähnlicher Weise ausgebildet,
- eine Verformbarkeit, die während des Herstellungsverfahrens kurzzeitig auf thermischem oder mechanischem Wege erzeugt wird.

Das Herstellungsverfahren lässt sich durchführen, indem das Verstärkungselement während des Prozesses entsprechend bearbeitet oder vor Beginn des Prozesses in entsprechender geometrischer Form zur Verfügung gestellt wird.

Bei einer vorteilhaften Variante weist das Verstärkungselement Schlitze auf, die sich beim Zuführ- und Fügeprozess über die Elastizität des Materials öffnen, somit über eine elastische Verformbarkeit verfügen und eine Verformbarkeit in der x-y-Plattenebene zulassen. Vorteilhaft wird der sich ergebende Hohlraum, der von den Schlitzen gebildet wird, genutzt, um ein Bindemittel einzubringen. Als Bindemittel können unterschiedliche Systeme nach dem Stand der Technik verwendet werden, deren Auswahl sich nach den jeweiligen Fügepartnern und dem gewählten Verfahren richtet.

Vorzugsweise wird ein thermoplastischer Schmelzklebstoff verwendet. Derartige Bindemittel lassen sich bezüglich ihrer Eigenschaften auf den erfindungsgemäßen Verwendungszweck einstellen. Vorteilhaft bei dieser Variante der Herstellung sind das schnelle Abbindeverhalten, die verhältnismäßig geringe Anspruchslosigkeit und die Prozesssicherheit des Bindemittels.

Das Bindemittel lässt sich vorteilhaft zum Zeitpunkt der Öffnung der Schlitze einbringen. Dies erfolgt bei der Zuführung des Verstärkungselementes auf einer tangential zum Werkstück verlaufenden Kreisbahn. Nachdem das Verstärkungselement in das plattenförmige Material eingeführt worden ist, hat es die tangentiale Kreisbahn verlassen und liegt wieder als gerades Verstärkungselement vor. Durch die Rückverformung wird das noch thermoplastisch aktivierte Bindemittel aus dem Schlitz ausgetragen und verbindet sich vorteilhaft mit der Kernlage der Sandwichplatte. Durch das Bindemittel wird das geschlitzte Verstärkungselement zu einem Strang gefügt, was sich auf eine fehlerfreie Erzeugung eines Rasters positiv auswirkt.

Im Anschluss an den diesen Schritt kann das Lochraster oder notwendige Ausnehmungen auf konventionelle Art in die verstärkte Randzone der Sandwichplatte eingebracht und die Beschläge befestigt werden.

Je nach Art der Beschläge ist es zweckmäßig, die Lage der Nut zur Aufnahme des Verstärkungselementes und ggf. die Anzahl der Nuten in der Mittellage der Sandwichplatte anzupassen.

Die Erfindung erlaubt das Einbringen der Nuten zum Einsetzen des Verstärkungselementes an allen vier Seiten des plattenförmigen Materials sowie eine vorteilhafte Dopplung des Verstärkungselementes im Eckbereich des Werkstückes. Dies ist aus fertigungstechnologischer Sicht und aus Gründen der konstruktiven Verstärkung der Sandwichplatte in diesen Bereichen besonders vorteilhaft.

Durch das erfindungsgemäß eingebrachte Verstärkungselement wird ermöglicht, dass dünne Dekorschmalflächenbänder im Bereich der Mittellage gestützt werden und deshalb keine negativen optischen Eigenschaften, wie z. B. ein "Schüsseln" auftreten.

Das Verfahren lässt sich vorteilhaft für die Schmalflächenbeschichtung von Sandwichplatten mit dünnen Deckschichten verwenden. Hierzu wird nach dem zuvor beschriebenen Verfahren unterhalb jeder Deckschicht mindestens ein Verstärkungselement eingelassen, wodurch sich die Anbindungsfläche auf einfache Art erhöhen lässt.

Das Verfahren lässt sich weiterhin für Zwecke verwenden, bei denen die bekannten Leichtbau-Systeme über eine konstruktive Beschlagbefestigung verfügen müssen. Hierzu werden bisher sehr aufwendige Beschläge eingesetzt, die in die Sandwichplatte eingebracht und dort vorrangig über technisch aufwendige Bindemittel (z. B. 2-Komponenten-Systeme, aufschäumende Systeme, die gekapselt im Beschlag untergebracht sind) mit den Deckschichten verbunden werden müssen.

Ingesamt besteht der Vorteil der Erfindung darin, dass sich durch das im Randbereich von Sandwichplatten zur Deckschicht parallel liegende Verstärkungselement verschiedene Applikationsmöglichkeiten ergeben. Durch die Anpassung des Verstärkungselementes mit entsprechenden Maßnahmen während des Herstellungsverfahrens oder durch Einsatz eines Verstärkungselementes mit entsprechenden Eigenschaften ist es möglich, auf kontinuierliche Weise einen Verbund zwischen Plattenwerkstoff und Verstärkungselement am fertigen Erzeugnis herzustellen. Besonders vorteilhaft ist die Verwendung des Verstärkungselementes nach entsprechender Bearbeitung für die Fixierung von Beschlägen im Rastermaß, insbesondere für das bekannte Rastermaß 32.

Durch das erfindungsgemäße Verfahren sowie das hierzu vorgesehene ebenfalls erfindungsgemäße biegeschlaffe Verstärkungselement wird eine zusätzliche Schicht im Randbereich erzeugt, die nach entsprechender Bearbeitung für die folgenden unterschiedlichen Aufgaben genutzt werden:
- Beschlagsbefestigung,
- Stützung des Schmalflächenbeschichtungsmittels,
- Anbindung des Schmalflächenbeschichtungsmittels bei dünnen Deckschichten der Sandwichplatte,
- Rasterlösung.

Das Wesen der Erfindung wird nachfolgend an Hand mehrerer Ausführungsbeispiele näher erläutert. In den Zeichnungen zeigen:
- Fig. 1 - 3: eine schematische Darstellung des Verfahrens in einzelnen Stufen
- Fig. 4: eine erste vorteilhafte Verfahrensvariante
- Fig. 5: eine zweite vorteilhafte Verfahrensvariante
- Fig. 6: ein erstes Bauteil
- Fig. 7: ein zweites Bauteil
- Fig. 8: ein drittes Bauteil
- Fig. 9: ein viertes Bauteil
- Fig. 10: ein geschlitztes Bauteil mit breiten Schlitzen
- Fig. 11: ein geschlitztes Bauteil mit schmalen Schlitzen
- Fig. 12: ein gelochtes Bauteil mit hoher Lochanzahl
- Fig. 13: ein nach einem Raster gelochtes Bauteil
- Fig. 14: ein Bauteil mit Schlitzen und Lochung
- Fig. 15: ein Bauteil mit schräg verlaufenden Schlitzen
- Fig. 16: ein Bauteil mit einem thermisch aktivierbaren Bereich
- Fig. 17: ein Bauteil mit aufgetragenem Bindemittel

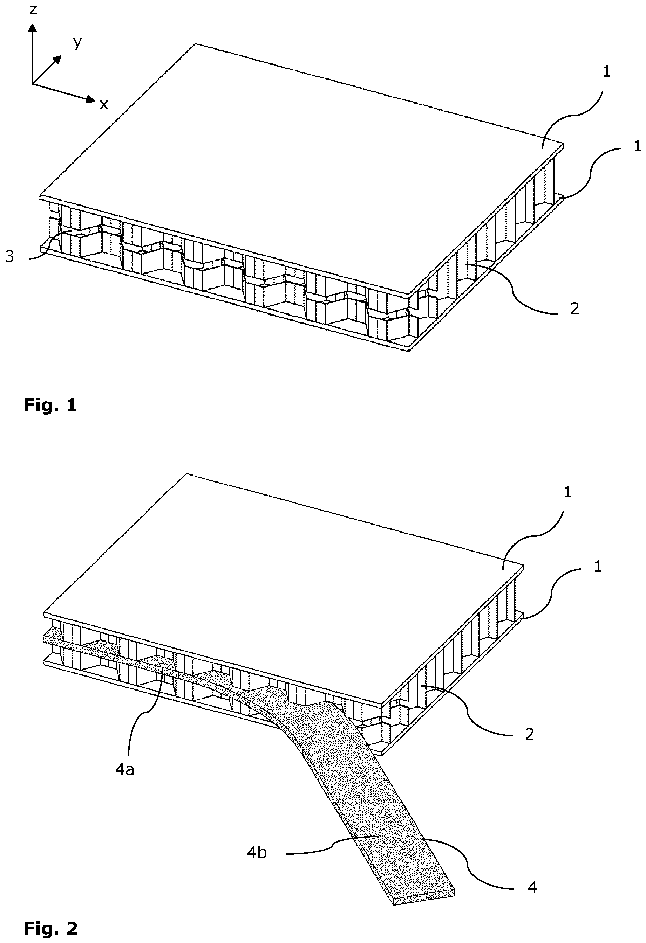

In den Figuren 1 bis 3 sind schematisch die Stufen der Herstellung der Sandwichplatte mit integriertem, biegeschlaffen band- oder stabförmigem Verstärkungselementes dargestellt.

Fig. 1 zeigt das horizontale, plattenparallele Erzeugen einer Nut (3) in der Kernlage (2) einer Sandwichplatte mit zwei Decklagen (1) aus einer Spanplatte mittels einer Kreissäge oder mit einem Scheiben- oder Profilfräsers.

Die vorzugsweise mittige, U-förmige Nut ist auf den Randbereich der Sandwichplatte begrenzt. Die Nuttiefe beträgt vorteilhaft 42 mm bis 48 mm. Die Nut verläuft vorteilhaft plattenparallel, d. h. unter einem Winkel von 90 Grad zur Schmalfläche der Kernlage.

Zur leichteren Darstellung zeigt Fig. 1 ein kartesisches Koordinatensystem (x-y-z), auf das nachfolgend, auch bei allen anderen Figuren und in der Beschreibung, Bezug genommen wird.

In Abhängigkeit von den aufzunehmenden Kräften und Momenten in der Randzone der Sandwichplatte und den Eigenschaften des aufzubringenden Schmalflächenbeschichtungsbandes kann die Nut auch außermittig und unter einem bevorzugten Winkel von 30 bis 60 Grad zur Oberfläche der Kernlage verlaufen.

Die Nut weist bevorzugt einen geradlinigen Verlauf auf, der den Einsatz leistungsfähiger spanabhebender Werkzeuge, wie Scheibenfräser oder Kreissägeblätter ermöglicht.

Die Verwendung von Profilfräsern ermöglicht das Einbringen einer Nut mit keil- oder trapezförmiger Kontur. Diese bevorzugte Variante erlaubt das Einbringen von als formideales Gegenstück ausgebildeten, biegeschlaffen Verstärkungselementen, die eine form- und kraftschlüssige Verbindung mit dem Werkstoff der Kernlage (2) ermöglichen.

In einer weiteren, gleichfalls bevorzugten Variante wird bei Einsatz von Stift- oder Fingerfräsern eine, in der Draufsicht zickzackartige oder wellenförmige Nut erzeugt. Dadurch können pro Flächeneinheit der Randzone mehr biegeschlaffe Verstärkungselemente eingebracht werden.

Anschließend wird, wie in Fig. 2 gezeigt, ein erfindungsgemäßes, biegeschlaffes Verstärkungselement (4) aus Kunststoff in die zuvor erzeugte Nut (3) eingeführt. Hierzu wird vorzugsweise ein Verstärkungselement mit einer Geometrie verwendet, das als Schmalflächenbeschichtungsband aus Beschichtungsprozessen von Möbelbauteilen bekannt ist.

Vorteilhaft beträgt die Breite des bandförmigen Verstärkungselementes zwischen 5 mm und 150 mm und die Dicke zwischen 0,5 mm und 10 mm.
Besonders bevorzugte flachbandförmige Verstärkungselemente weisen Querschnittsabmessungen mit einer Breite von 30 mm bis 50 mm und einer Dicke von 1,5 mm bis 4 mm auf.

Das flachband- oder stabförmige, biegeschlaffe Verstärkungselement (4) besteht vorzugsweise aus Spanplatte, Pappe, Kunststoff, Faserplatte, Sperrholz, veredelten Papiere oder preisgünstigen Furnieren.

Nach dem Einbringen und optionalen Verkleben des band- oder stabförmigen Verstärkungselementes (4) erfolgt die Endbearbeitung des überstehenden Materials des Verstärkungselementes durch Fräsen, Sägen und ggf. Schleifen zur Herstellung eines bündigen Abschlusses der stirnseitigen Schmalfläche der Sandwichplatte.

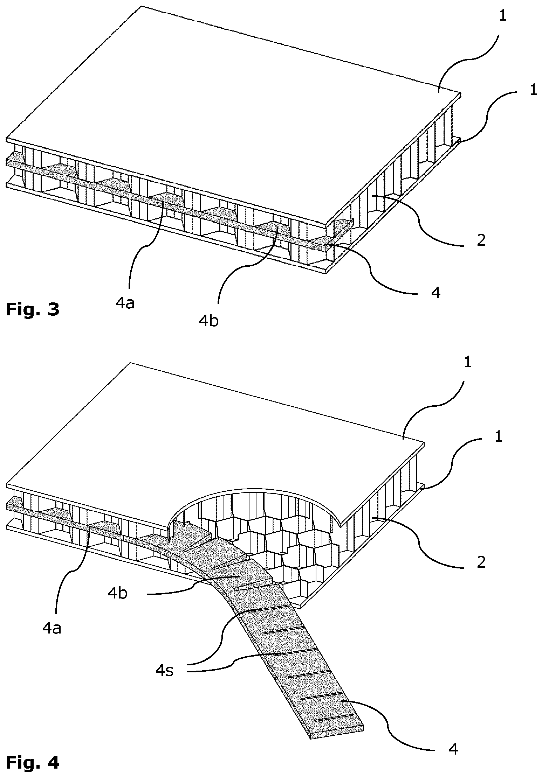

Fig. 3 zeigt die Sandwichplatte nach der spanenden Bearbeitung.

In Fig. 4 ist eine erste vorteilhafte Variante zur Herstellung der erfindungsgemäßen Sandwichplatte schematisch dargestellt. Bei dieser Variante wird ein einseitig geschlitztes Verstärkungselement (4) über eine nicht näher dargestellte Zuführeinrichtung von der Seite in die zuvor geschaffenen Nut eingebracht. Die Ausbildung der Schlitze (4s) ermöglicht eine elastische Verformung des bandförmigen Verstärkungselementes beim seitlichen Einfahren in das kontinuierlich vorbeigeführte Werkstück in plattenparalleler x-y-Ebene.

Das Verstärkungselement (4) besteht aus Spanplatte mit den Abmessungen 46 mm Breite und 3 mm Dicke. Das geschlitzte Verstärkungselement (4) kann als stab- oder bandförmiges Bauteil, z. B. durch Stanzen oder Ausklinken vorgefertigt werden.

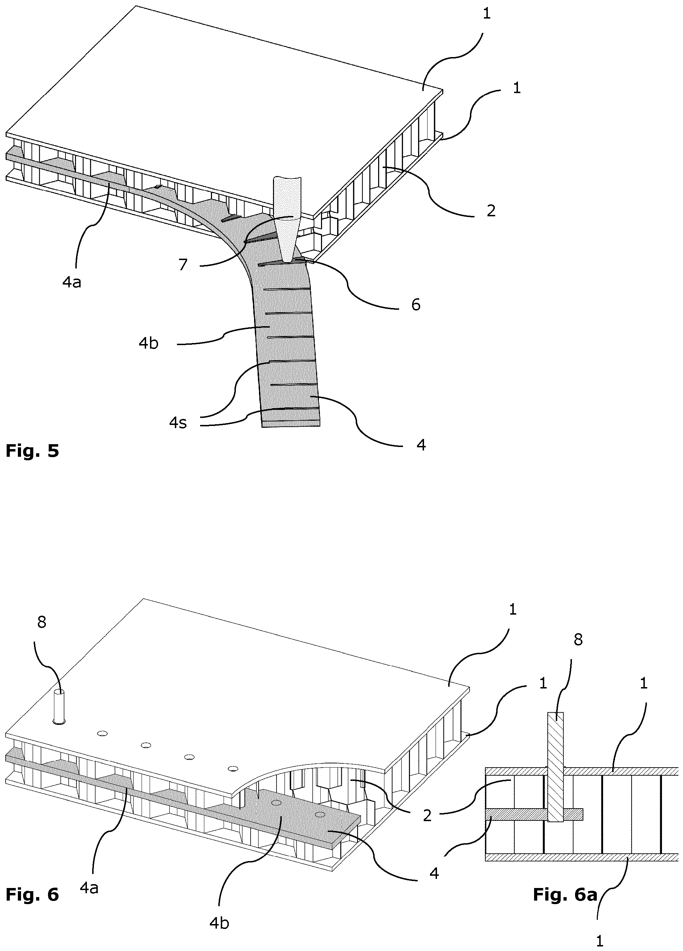

Fig. 5 zeigt eine zweite vorteilhafte Verfahrensvariante unter Verwendung eines einseitig geschlitzten Verstärkungselements (4) aus Pappe mit den Abmessungen von 50 mm Breite und 5 mm Dicke. Hierbei erfolgt ein Füllen der sich im Radius öffnenden Schlitze (4s) mit einem schnellabbindenden Bindemittelsystem, vorzugsweise einem Schmelzklebstoff über eine stark stilisiert dargestellte Klebstoffauftragseinrichtung (7). Dabei kann der Klebstoff (6) sowohl auf Breit- und/oder Schmalfläche (4b, 4a) und/ oder in den Schlitzen (4s) des Verstärkungselementes (4) eingebracht werden.
Das Bindemittel wird nach der Rückverformung des Verstärkungselementes (4) in der Kernlage (2) aus den sich wieder verengenden Schlitzen (4s) nach oben und unten ausgetragen und verbindet das Verstärkungselement (4) mit der Kernlage (2).

Fig. 6 zeigt ein erstes Bauteil, hergestellt aus einer Sandwichplatte mit einer leichten Kernlage (2) mit einer Hohlraumstruktur und mit einem, im Randbereich der Kernlage (2) eingefügten, zur Plattenebene x-y parallel liegenden Verstärkungselement (4). Das Verstärkungselement (4) besteht aus einem geschäumten Kunststoff und besitzt eine Breite von 35 mm und eine von Dicke 8 mm. Die Verklebung erfolgt mit einem PU-Schmelzklebstoff. Durchgehend durch eine Deckschicht (1) und das Verstärkungselement (4) werden Bohrungen (5) eingebracht, die zur Aufnahme von stiftförmigen Beschlägen (8) dienen. Durch das Verstärkungselement (4) erfolgt eine zusätzliche Fixierung der Beschläge (8) ohne zusätzliche Einbringung von Vergussmassen o. dgl. Die so geschaffene Sandwichplatte eignet sich insbesondere für eine randnahe Lochreihung - Raster 32 - zur Aufnahme von Beschlägen (8).

Fig. 6a zeigt die Sandwichplatte in einer vergrößerten Schnittdarstellung der z-x-Ebene. Deutlich wird, dass das stiftförmige Beschlagteil (8) durch die Decklage (1) und das eingebrachte Verstärkungselement (4) fixiert wird.

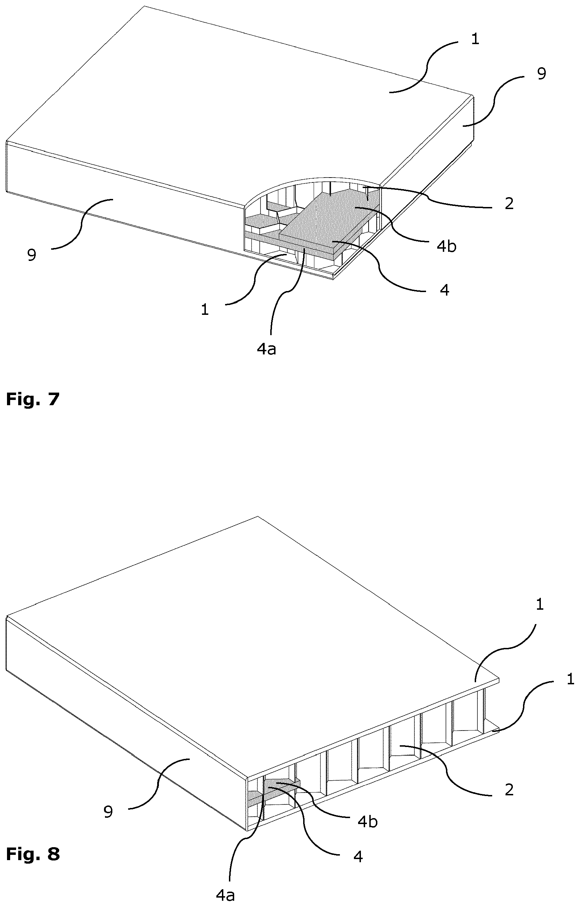

Fig. 7 zeigt ein zweites Ausführungsbeispiel, hergestellt aus Sandwichplatte mit leichter Kernlage (2) und einer Hohlraumstruktur, mit mehreren im Randbereich der Kernlage (2) eingefügten, zur Plattenebene x-y parallel liegenden Verstärkungselementen (4). Bei dieser Variante erfährt die Sandwichplatte eine vorteilhafte Festigkeitserhöhung auch im Eckbereich durch Überblattung der überlappend angeordneten Verstärkungselemente (4). Die Verstärkungselemente (4) bestehen aus einer Faserplatte und besitzen eine Breite von 22 mm und eine von Dicke 2 mm. Zur Verklebung wird ein PVAC -Klebstoff verwendet. Sichtbar wird, dass die abschließend aufgebrachten Schmalflächenbeschichtungsbänder (9) eine durchgängige Abstützung durch die Schmalflächen (4a) der Verstärkungselemente (4) erfahren.

In der Fig. 8 ist ein drittes Ausführungsbeispiel dargestellt. Bei diesem Bauteil dient das eingebrachte Verstärkungselement (4) der zusätzlichen Abstützung von dekorativen Schmalflächenbeschichtungsbändern (9). Das Verstärkungselement (4) besteht aus einem Kunststoff und besitzt eine Breite von 15 mm und eine von Dicke 4 mm. Hierbei dienen nicht nur, wie sonst üblich, die Schmalflächen der Deckschichten (1) zur Beleimung und Verbindung mit einem bekannten "Kantenband". Das Kantenband wird mit dem erfindungsgemäßen Verstärkungselement (4) mittels Leimauftrag verbunden.

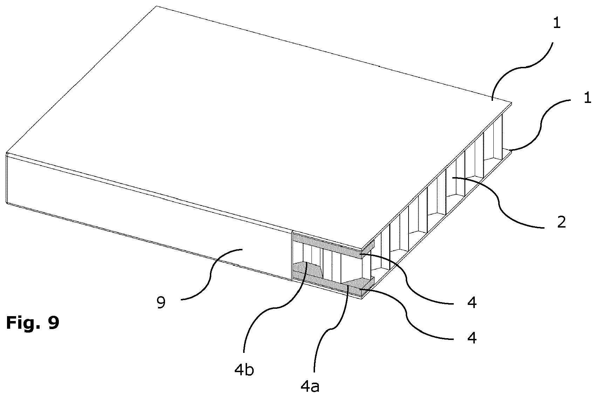

Fig. 9 zeigt ein viertes Ausführungsbeispiel. Hierbei erfolgt eine gezielte Vergrößerung der Anbindungsfläche von Sandwichplatten mit dünnen Deckschichten. Dabei sind die nachträglich eingebrachten Verstärkungselemente (4) jeweils unterhalb der Decklagen (1) angeordnet. Die Verstärkungselemente (4) bestehen aus einem Sperrholz mit einer Breite von 8 mm und eine von Dicke 3,5 mm. Die Verbindung der Verstärkungselemente (4) mit der Sandwichplatte erfolgt mittels eines 1-Komponenten-Polyurethanklebstoffes.

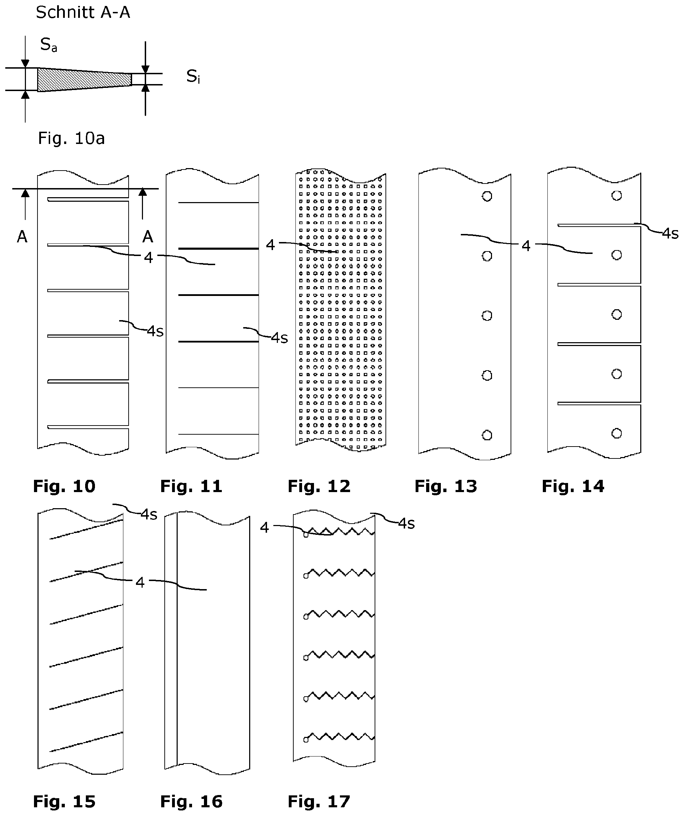

Die Figuren 10 bis 17 zeigen verschiedene bevorzugte Ausführungen des erfindungsgemäßen Verstärkungselementes (4), das in die nachträglich geschaffene Nut der Sandwichplatte eingebracht wird.

Fig. 10 zeigt einen Ausschnitt eines bandförmigen Verstärkungselementes (4) in einer Draufsicht. Das Verstärkungselement (4) weist einen (in dieser Darstellung nicht sichtbaren) rechteckigen Querschnitt und eine Anzahl beabstandeter Schlitze (4s) auf.

Fig. 10a zeigt eine Abwandlung des Verstärkungselementes (4) von Fig. 10 in einer geschnittenen Darstellung (Schnitt A-A). Das stabförmige Verstärkungselement weist hier einen keil- bzw. trapezförmigen Querschnitt (mit größerer Wanddicke sₐ gegenüber der inneren Wanddicke sᵢ) auf. Die beabstandeten Schlitze des stabförmigen Verstärkungselementes (4) sind in dieser Ansicht nicht sichtbar.

Fig. 11 zeigt einen Ausschnitt eines bandförmigen Verstärkungselementes in einer Draufsicht. Die regelmäßig beabstandeten Schlitze (4s) verlaufen unter einem rechten Winkel zur Längsachse des Verstärkungselementes (4) und sind mit einem Klebstoff (6) gefüllt.

Fig. 12 zeigt einen Ausschnitt eines bandförmigen Verstärkungselementes (4) in einer Draufsicht. Das Verstärkungselement (4) weist ein symmetrisches Lochbild, das als Perforation wirkt.

Fig. 13 zeigt einen Ausschnitt eines bandförmigen Verstärkungselementes (4) in einer Draufsicht. Das Verstärkungselement (4) weist ein asymmetrisches Lochbild auf, in dem nach dem Einfügen in die Nut der Kernlage (2) des Sandwichelementes Beschlagteile zusätzlich arretiert werden.

Fig. 14 zeigt einen Ausschnitt eines bandförmigen Verstärkungselementes (4) in einer Draufsicht. Das Verstärkungselement (4) weist einen (in dieser Darstellung nicht sichtbaren) keilförmigen Querschnitt und eine Anzahl regelmäßig beabstandeter Schlitze (4s) mit in den Zwischenräumen angeordneten Durchbrüchen (Bohrungen) auf, die der späteren Fixierung von Beschlagteilen dienen.

Fig. 15 zeigt einen Ausschnitt eines bandförmigen Verstärkungselementes (4) in einer Draufsicht. Das Verstärkungselement (4) weist einen (in dieser Darstellung nicht sichtbaren) rechteckigen Querschnitt und eine Anzahl schräg zur Längsachse verlaufender beabstandeter Schlitze (4s) auf, die mit einem thermisch reaktivierbaren Klebstoff (6) gefüllt sind. Der schräge Verlauf der Schlitze verbessert die Verformbarkeit des Verstärkungselementes (4) beim Einbringen in die Nut der Kernlage.

Fig. 16 zeigt einen Ausschnitt eines bandförmigen Verstärkungselementes (4) in einer Draufsicht. Das Verstärkungselement (4) weist einen (in dieser Darstellung nicht sichtbaren) rechteckigen Querschnitt auf und besteht aus zwei in Längsrichtung des Verstärkungselementes (4) parallel verlaufenden Abschnitten, wobei der, in das Innere der Kernlage weisende Abschnitt thermisch aktivierbar ist und eine innige Verbindung des Verstärkungselementes (4) mit der Kernlage ermöglicht.

Fig. 17 zeigt einen Ausschnitt eines stabförmigen Verstärkungselementes (4) in einer Draufsicht. Das Verstärkungselement (4) weist einen (in dieser Darstellung nicht sichtbaren) keilförmigen Querschnitt und eine Anzahl quer zur Längsachse zickzackförmig verlaufender beabstandeter Schlitze (4s) auf, die mit einem thermisch reaktivierbaren Klebstoff (6) gefüllt sind.

Um bei der elastischen Verformung des Verstärkungselementes einem Weiterreißen der Schlitze zu begegnen, befinden sich an deren Ende bevorzugt Ausklinkungen.

### Bezugszeichenliste

- 1: Decklage
- 2: Kernlage
- 3: Nut
- 4: Verstärkungselement
- 4a: Schmalseite des Verstärkungselementes
- 4b: Schmalseite des Verstärkungselementes
- 4s: Schlitz
- 5: Bohrung
- 6: Klebstoff
- 7: Klebstoffauftragseinrichtung
- 8: Beschlag
- 9: Schmalflächenbeschichtungsband

- sₐ: äußere Wanddicke (von der Kernlage abgewandte Seite) eines Verstärkungselementes 4 mit asymmetrischem (keil-, dreieck- oder trapezförmigem) Querschnitt

- sᵢ: innere Wanddicke (der Kernlage zugewandte Seite) eines Verstärkungselementes 4 mit asymmetrischem (keil-, dreieck- oder trapez-förmigem) Querschnitt

## Patentansprüche

1. Sandwichplatte mit mindestens zwei äußeren Decklagen, mindestens einem an eine Schmalfläche der Sandwichplatte gefügten Schmalflächenbeschichtungsband und mindestens einer, bevorzugt genau einer Kernlage, die aus einem Leichtbaumaterial, bevorzugt aus Papier- oder Pappwabenkern oder PUR-Schaum besteht und mindestens eine, im Wesentlichen parallel zu den Decklagen verlaufende Nut aufweist, in der mindestens ein Verstärkungselement angeordnet ist, das form- und/oder stoffschlüssig mit der Randzone der Kernlage verbunden ist,
**dadurch gekennzeichnet, dass**
die Nut in einer Randzone der Sandwichplatte verläuft, um ein Durchschlagen und/oder Schlüsseln des Schmalflächenbeschichtungsbandes zu verhindern.

2. Sandwichplatte nach Anspruch 1, **dadurch gekennzeichnet, dass** das band- oder stabförmige, bevorzugt biegeschlaffe Verstärkungselement einen rechteckigen, dreieckigen, keil- oder trapezförmigen oder T-förmigen Querschnitt aufweist und vorzugsweise aus Holz, Holzwerkstoff, Pappe, Papier oder Kunststoff besteht.

3. Sandwichplatte nach Anspruch 2, **dadurch gekennzeichnet, dass** das Verstärkungselement Schlitze, Durchbrüche oder Aussparungen aufweist.

4. Sandwichplatte nach einem der Ansprüche 2 und 3, **dadurch gekennzeichnet, dass** das Verstärkungselement aus mindestens zwei, in Längsrichtung des Verstärkungselementes parallel verlaufenden Abschnitten besteht, von denen mindestens ein Abschnitt aus einem Werkstoff besteht, der thermisch aktivierbar oder reaktivierbar ist.

5. Sandwichplatte nach einem der Ansprüche 1 bis 4, **dadurch gekennzeichnet, dass** das Verstärkungselement eine, gegenüber seiner Breite nur geringe Dicke und um eine seiner Schmalseiten entlang der Längsrichtung eine erhöhte Verformbarkeit aufweist.

6. Sandwichplatte nach Anspruch 5, **dadurch gekennzeichnet, dass** die Schmalseite des band- oder stabförmigen Verstärkungselementes eine Dicke von 1 mm bis 10 mm und die Breitseite eine Breite von 5 mm bis 50 mm aufweist.

7. Sandwichplatte nach einem der Ansprüche 5 und 6, **dadurch gekennzeichnet, dass** das Verstärkungselement Schlitze, Ausnehmungen oder Perforationen aufweist.

8. Sandwichplatte nach einem der Ansprüche 5 bis 7, **dadurch gekennzeichnet, dass** die Schlitze, Ausnehmungen oder Perforationen in Längsrichtung des Verstärkungselementes ein- oder beidseitig angeordnet sind und die Schlitze oder Perforationen einen linearen, kurvenförmigen oder gezackten Verlauf aufweisen.

9. Sandwichplatte nach einem der Ansprüche 5 bis 8, **dadurch gekennzeichnet, dass** das Verstärkungselement aus mindestens zwei, in Längsrichtung des Verstärkungselementes parallel verlaufenden Abschnitten besteht, von denen mindestens ein Abschnitt aus einem Werkstoff besteht, der thermisch aktivierbar oder reaktivierbar ist.

10. Verfahren zur Herstellung einer im Randbereich verstärkten Sandwichplatte mit mindestens zwei äußeren Decklagen und mindestens einer Kernlage, bevorzugt genau einer Kernlage, die aus einem Leichtbaumaterial, bevorzugt aus Papier- oder Pappwabenkern oder PUR-Schaum besteht, **dadurch gekennzeichnet, dass** nach dem Fügen der Kern- und Decklagen mindestens eine, im Wesentlichen parallel zu den Decklagen verlaufende Nut im Randbereich in die Kernlage eingebracht und nachfolgend in die so geschaffene Nut mindestens ein Verstärkungselement eingefügt wird.

11. Verfahren nach Anspruch 10, **dadurch gekennzeichnet, dass** nach dem Fügen der Kern- und Decklagen mindestens eine, im Wesentlichen parallel zu den Decklagen verlaufende Nut in die Kernlage eingebracht und nachfolgend in die so geschaffene Nut mindestens ein Verstärkungselement eingefügt und abschließend der Überstand des Verstärkungselementes zur Herstellung eines bündigen Abschlusses der Sandwichplatte spanlos oder spanend bearbeitet wird.

12. Verfahren nach Anspruch 10 oder 11, **dadurch gekennzeichnet, dass** zum Fügen des Verstärkungselementes ein Abschnitt des biegeweichen Verstärkungselements zur Nut vorgelegt und in die Nut eingeführt wird, wobei die verbleibende Länge gegenüber dem vorgelegten Abschnitt unter Ausbildung eines gebogenen Bereiches zur Schmalfläche der Sandwichplatte ausgestellt und unter Führung des gebogenen Bereiches entlang der verbleibenden Länge das Verstärkungselement in die Nut gefügt wird.

13. Verfahren nach einem der Ansprüche 10 bis 12, **dadurch gekennzeichnet, dass** das band- oder stabförmige Verstärkungselement mit einer Beleimung in die Nut eingebracht wird.

14. Verfahren nach einem der Ansprüche 10 bis 13, **dadurch gekennzeichnet, dass** nach der Endbearbeitung der Sandwichplatte das Einbringen von Lochbildern, Bohrungen oder Ausnehmungen für die Aufnahme von Beschlagteilen im verstärkten Randbereich erfolgt.

15. Verfahren nach einem der Ansprüche 10 bis 14, **dadurch gekennzeichnet, dass** nach der Endbearbeitung der Sandwichplatte die Schmalflächenbeschichtung erfolgt, wobei das Verstärkungselement eine zusätzliche Auflage für das Schmalflächenmaterial bildet.

16. Verfahren nach einem der Ansprüche 10 bis 15, **dadurch gekennzeichnet, dass** zwei oder mehrere biegeschlaffe, bevorzugt bandförmige Verstärkungselemente in die Nut eingefügt werden.

## Claims

1. Sandwich board comprising at least two outer surface layers, at least one narrow surface coating strip joined to a narrow surface of the sandwich board and at least one, preferably exactly one, core layer which consists of a lightweight construction material, preferably paper or cardboard honeycomb core or PUR foam, and at least one groove running substantially parallel to the surface layers in which at least one reinforcement element is arranged which is connected in a form-fitting or substance-bonded manner with the edge zone of the core layer,
**characterised in that**
the groove runs in an edge zone of the sandwich board in order to prevent a piercing and/or crushing of the narrow surface coating strip.

2. Sandwich board according to claim 1, **characterised in that** the strip- or rod-formed, preferably flexible reinforcement element has a rectangular, triangular, wedge-shaped or trapezoidal or T-shaped cross section and preferably consists of wood, wood material, card, paper or plastic.

3. Sandwich board according to claim 2, **characterised in that** the reinforcement element has slits, openings or recesses.

4. Sandwich board according to one of the claims 2 and 3, **characterised in that** the reinforcement element consists of at least two sections running in parallel in the longitudinal direction of the reinforcement element, of which at least one section consists of a material which is thermally activatable or reactivatable.

5. Sandwich board according to one of the claims 1 to 4, **characterised in that** the reinforcement element has only a small thickness in comparison with its width, and displays an increased deformability around one of its narrow sides along the longitudinal direction.

6. Sandwich board according to claim 5, **characterised in that** the narrow side of the strip- or rod-formed reinforcement element has a thickness of 1 mm to 10 mm and the broad side has a width of 5 mm to 50 mm.

7. Sandwich board according to one of the claims 5 and 6, **characterised in that** the reinforcement element has slits, recesses or perforations.

8. Sandwich board according to one of the claims 5 to 7, **characterised in that** the slits, recesses or perforations are arranged on one or both sides in the longitudinal direction of the reinforcement element and the slits or perforations follow a linear, curved or zig-zag path.

9. Sandwich board according to one of the claims 5 to 8, **characterised in that** the reinforcement element consists of at least two sections running in parallel in the longitudinal direction of the reinforcement element, of which at least one section consists of a material which is thermally activatable or reactivatable.

10. Method for producing a sandwich board, reinforced in the edge region, with at least two outer surface layers and at least one core layer, preferably exactly one core layer, which consists of a lightweight construction material, preferably paper or cardboard honeycomb core or PUR foam, **characterised in that** after joining the core and surface layers at least one groove running substantially parallel to the surface layers is introduced into the core layer in the edge region and at least one reinforcement element is subsequently inserted in the groove created in this way.

11. Method according to claim 10, **characterised in that** after joining the core and surface layers at least one groove running substantially parallel to the surface layers is introduced into the core layer and at least one reinforcement element is subsequently inserted in the groove created in this way and the projecting portion of the reinforcement element is then machined, with or without cutting, in order to form a flush edge of the sandwich board.

12. Method according to claim 10 or 11, **characterised in that** in order to join the reinforcement element a section of the flexible reinforcement element is presented to the groove and introduced into the groove, wherein the remaining length is bent out relative to the presented section, forming a region which is bent relative to the narrow surface of the sandwich board, and the reinforcement element is joined in the groove, guiding the bent region along the remaining length.

13. Method according to one of the claims 10 to 12, **characterised in that** the strip- or rod-formed reinforcement element is introduced into the groove with a glue coating.

14. Method according to one of the claims 10 to 13, **characterised in that**, following the final processing of the sandwich board, hole patterns, bores or recesses are introduced in the reinforced edge region to accommodate fitting components.

15. Method according to one of the claims 10 to 14, **characterised in that** the narrow surface is coated following the final processing of the sandwich board, wherein the reinforcement element forms an additional support for the narrow surface material.

16. Method according to one of the claims 10 to 15, **characterised in that** two or more flexible, preferably strip-formed reinforcement elements are inserted in the groove.

## Revendications

1. Plaque en sandwich avec au moins deux couches de recouvrement extérieures, au moins une bande de revêtement de surface étroite ajustée à une surface étroite de la plaque en sandwich et au moins une, de préférence exactement une couche de noyau, qui est constituée d'un matériau léger, de préférence d'un noyau en nid d'abeille en papier ou carton ou de mousse PUR et présente au moins une rainure s'étendant sensiblement parallèlement aux couches de recouvrement, dans laquelle au moins un élément de renforcement est agencé, qui est relié par complémentarité de forme et/ou par liaison de matière à la zone périphérique de la couche de noyau,
**caractérisée en ce que**
la rainure s'étendant dans une zone périphérique de la plaque en sandwich pour empêcher une pénétration et/ou un claquement de la bande de revêtement de surface étroite.

2. Plaque en sandwich selon la revendication 1, **caractérisée en ce que** l'élément de renforcement en forme de bande ou de barre, de préférence souple présente une section transversale rectangulaire, triangulaire, cunéiforme ou trapézoïdale ou en forme de T et est constitué de préférence en bois, matériau en bois, carton, papier ou plastique.

3. Plaque en sandwich selon la revendication 2, **caractérisée en ce que** l'élément de renforcement présente des fentes, passages ou évidements.

4. Plaque en sandwich selon l'une quelconque des revendications 2 et 3, **caractérisée en ce que** l'élément de renforcement est constitué d'au moins deux sections s'étendant parallèlement dans le sens de la longueur de l'élément de renforcement, dont au moins une section est constituée d'un matériau, qui est activable ou réactivable thermiquement.

5. Plaque en sandwich selon l'une quelconque des revendications 1 à 4, **caractérisée en ce que** l'élément de renforcement présente une épaisseur que faible par rapport à sa largeur et une déformabilité accrue autour d'un de ses côtés étroits le long du sens de la longueur.

6. Plaque en sandwich selon la revendication 5, **caractérisée en ce que** le côté étroit de l'élément de renforcement en forme de bande ou de barre présente une épaisseur de 1 mm à 10 mm et le côté large présente une largeur de 5 mm à 50 mm.

7. Plaque en sandwich selon l'une quelconque des revendications 5 et 6, **caractérisée en ce que** l'élément de renforcement présente des fentes, des évidements ou des perforations.

8. Plaque en sandwich selon l'une quelconque des revendications 5 à 7, **caractérisée en ce que** les fentes, les évidements ou les perforations sont agencés dans le sens de la longueur de l'élément de renforcement d'un côté ou des deux côtés et les fentes ou perforations présentent une allure linéaire, curviligne ou dentelée.

9. Plaque en sandwich selon l'une quelconque des revendications 5 à 8, **caractérisée en ce que** l'élément de renforcement est constitué d'au moins deux sections s'étendant parallèlement dans le sens de la longueur de l'élément de renforcement, dont au moins une section est constituée d'un matériau qui est thermiquement activable ou réactivable.

10. Procédé de fabrication d'une plaque en sandwich renforcée sur la zone périphérique avec au moins deux couches de recouvrement extérieures et au moins une couche de noyau, de préférence exactement une couche de noyau, qui est constituée d'un matériau léger, de préférence d'un noyau en nid d'abeille en papier ou carton ou de mousse PUR, **caractérisé en ce qu'**après l'ajustage des couches de noyau et de recouvrement, au moins une rainure s'étendant sensiblement parallèlement aux couches de recouvrement est introduite dans la zone périphérique dans la couche de noyau et ensuite au moins un élément de renforcement est inséré dans la rainure ainsi créée.

11. Procédé selon la revendication 10, **caractérisé en ce qu'**après l'ajustage des couches de noyau et de recouvrement, au moins une rainure s'étendant sensiblement parallèlement aux couches de recouvrement est introduite dans la couche de noyau et ensuite au moins un élément de renforcement est inséré dans la rainure ainsi créée et enfin le surplomb de l'élément de renforcement est traité sans enlèvement de copeaux ou par enlèvement de copeaux pour la fabrication d'une finition à fleur de la plaque en sandwich.

12. Procédé selon la revendication 10 ou 11, **caractérisé en ce que** pour l'ajustage de l'élément de renforcement, une section de l'élément de renforcement souple est présentée à la rainure et introduite dans la rainure, dans lequel la longueur restante par rapport à la section présentée est exposée en formant une zone courbe par rapport à la surface étroite de la plaque en sandwich et l'élément de renforcement est ajusté dans la rainure en guidant la zone courbe le long de la longueur restante.

13. Procédé selon l'une quelconque des revendications 10 à 12, **caractérisé en ce que** l'élément de renforcement en forme de bande ou de barre est introduit dans la rainure avec un encollage.

14. Procédé selon l'une quelconque des revendications 10 à 13, **caractérisé en ce qu'**après le traitement de finition de la plaque en sandwich, l'introduction de perforations, perçages ou évidements pour la réception de pièces de ferrure dans la zone périphérique renforcée a lieu.

15. Procédé selon l'une quelconque des revendications 10 à 14, **caractérisé en ce qu'**après le traitement de finition de la plaque en sandwich, le revêtement de surface étroite a lieu, dans lequel l'élément de renforcement forme un support supplémentaire pour le matériau de surface étroite.

16. Procédé selon l'une quelconque des revendications 10 à 15, **caractérisé en ce que** deux ou plusieurs éléments de renforcement souples, de préférence en forme de bande sont insérés dans la rainure.
